# EUROPÄISCHE PATENTANMELDUNG

(11) **EP 2 826 955 A1**
(43) Veröffentlichungstag der Anmeldung: **21.01.2015**
(21) Anmeldenummer: 13176470.6
(22) Anmeldetag: 15.07.2013
(51) Int. Cl.: F01D 5/00, F01D 5/18, F01D 5/20, B23P 15/04, B23P 6/00

(54) **Gegossene Turbinenschaufel mit einer durch einen Stopfen verschlossenen Öffnung und Verfahren zum Verschließen einer Öffnung einer gegossenen Turbinenschaufel**

(71) Anmelder: Siemens Aktiengesellschaft, 80333 München (DE)
(72) Erfinder: Buchholz, Björn, Dr., 45470 Mülheim an der Ruhr (DE); Heselhaus, Andreas, Dr., 40235 Düsseldorf (DE)

(57) **Zusammenfassung**

Die Erfindung betrifft eine gegossene Turbinenschaufel (1) mit einer durch einen Stopfen (20) verschlossenen Öffnung (10) sowie ein Verfahren zum Herstellen einer solchen Turbinenschaufel (1). Um eine vergleichsweise langlebige Turbinenschaufel (1) anzugeben, deren Spannung im Bereich der verschlossenen Öffnung (10) minimiert sind und die zudem vergleichsweise einfach und kostengünstig herstellbar ist, wird vorgeschlagen, dass der Stopfen (20) in der Turbinenschaufel (1) verklebt ist. Weiter wird vorgeschlagen, dass zum Herstellen der Turbinenschaufel (1) ein Grundkörper der Turbinenschaufel (1) mit einer Öffnung (10) hergestellt wird, wobei ein die Öffnung (10) verschließender Stopfen (20) in der Öffnung (10) eingeklebt wird.

## Beschreibung

Die Erfindung betrifft eine gegossene Turbinenschaufel mit einer durch einen Stopfen verschlossenen Öffnung und ein Verfahren zum Verschließen einer Öffnung einer Turbinenschaufel.

Bekanntermaßen werden Teile von Turbinenschaufeln oder auch komplette Turbinenschaufeln, die insbesondere bei Flugzeug-Gasturbinen und bei stationären Gasturbinen zum Einsatz gelangen, durch ein Gießverfahren hergestellt. Da die Turbinenschaufeln im Betrieb vergleichsweise hohen Temperaturen dauerhaft Stand halten müssen, können diese kühlbar und somit hohl ausgestaltet sein. Während des Betriebes einer Gasturbine kann dann im Inneren der kühlbaren Turbinenschaufel ein Kühlmedium, beispielsweise Kühlluft oder Kühldampf, strömen, um die von außen in das Schaufelmaterial eingeleitete Wärmeenergie wieder auszuleiten und abzuführen. Zum Herstellen der Hohlräume sind somit Gusskerne benötigt, die in einer Gießvorrichtung positioniert werden müssen, mit welcher die Turbinenschaufel gegossen werden kann. Bekanntermaßen werden bisher die Gusskerne durch so genannte Quarz-Stifte positioniert. Diese Stifte hinterlassen jedoch in der gegossenen Turbinenschaufel Öffnungen, welche prinzipiell unerwünscht sind. Um derartige Kernhalteöffnungen zu schließen, ist es beispielsweise aus der EP 1 228 293 B1 bekannt, in diese Löcher einen Stopfen einzusetzen und diesen mit der Turbinenschaufel zu verschweißen.

Das Schweißen des Stopfens hat sich jedoch als nachteilig herausgestellt, da mit dem Schweißverfahren in der Turbinenschaufel Risse induziert werden können, die Integrität bei steigender Benutzungsdauer gefährden können. Weiter ist von Nachteil, dass das Schweißgut meistens ein anderes Material ist als das Material der Turbinenschaufel. Aufgrund unterschiedlicher Wärmeausdehnungskoeffizienten dehnen sich einige Bestandteile bei Wärmeeintrag mehr aus als der Grundwerkstoff der Turbinenschaufel, was Rissentstehung und Risswachstum in der Turbinenschaufel begünstigt.

Weiter ist aus der US 6,454,156 B1 bekannt, derartige Stopfen noch vor dem Festschweißen in der Turbinenschaufel zu verschrauben.

Aufgabe der Erfindung ist daher die Bereitstellung einer gegossenen Turbinenschaufel mit einer durch einen Stopfen verschlossenen Öffnung, deren Lebensdauer verlängert ist. Weitere Aufgabe der Erfindung ist die Bereitstellung eines kostengünstiges Verfahrens zum Herstellen einer lebensdauerverlängerten Turbinenschaufel.

Die auf die Turbinenschaufel gerichtete Aufgabe wird mit einer solchen gemäß den Merkmalen des Anspruchs 1 gelöst. Die auf das Verfahren gerichtete Aufgabe wird gelöst mit den Merkmalen des Anspruchs 7.

Beiden Lösungen ist gemein, dass ein die Öffnung verschießender Stopfen in der Öffnung verklebt ist. Im Unterschied zu den bekannten Schweißprozessen und auch Lötprozessen, bei denen der Stopfen selber stoffschlüssig mit dem Grundkörper der Turbinenschaufel verbunden ist, hat das Verkleben des Stopfens in der Öffnung den Vorteil, dass dieses bei Raumtemperatur ohne eine lokale Erwärmung des Materials der Turbinenschaufel bzw. des Stopfens stattfinden kann. Beim Schweißen oder Löten hingegen wird nicht nur die Schweißzugabe bzw. das Lot erhitzt, sondern auch die an der Verbindung beteiligten Bauteile, welche hier der Stopfen und die Turbinenschaufel wären. Diese Erhitzung wird beim Kleben vermieden, was das Entstehen von Rissen in näherer Umgebung der Verbindung bzw. der Öffnung reduziert und das Einbringen von Spannungen dort vermeidet. Mithin sieht das Verfahren zum Verschließen einer Öffnung in einer gegossenen Turbinenschaufel vor, zuerst einen Grundkörper der Turbinenschaufel bzw. die Turbinenschaufel selber herzustellen. Die zu verschließende Öffnung kann dabei eine Kernhalteöffnung sein. Sie kann aber auch eine entweder als Durchgangsloch oder als Sackloch ausgeführte Öffnung sein, die im Rahmen einer Reparatur einer (betriebsbeanspruchten) Turbinenschaufel in den Grundkörper der Turbinenschaufel bzw. in die Turbinenschaufel eingebracht wurde, beispielsweise um einen Riss auszubohren. Anschließend wird der Stopfen, der in seinen Abmaßen zur Öffnung der Turbinenschaufel korrespondiert, in der zu verschließenden Öffnung verklebt. Dazu sind entweder der Stopfen und/oder die Wände der Öffnung mit dem zumeist pastenförmigen Klebstoff zu bestreichen, wonach der Stopfen in der zu verschließenden Öffnung eingesetzt wird. Falls erforderlich kann der Stopfen temporär in der Öffnung fixiert werden. Nach dem Aushärten des keramischen Klebstoffs sitzt der Stopfen stoffschlüssig in der Öffnung, wobei jedoch ein Stoffschluss zwischen Stopfen und derjenigen Wand, in der die Öffnung angeordnet ist, vermieden ist. Der Stoffschluss tritt lediglich einerseits zwischen Klebstoff und Stopfen und andererseits zwischen Klebstoff und Wand ein. Als Resultat ist also zwischen dem Stopfen und der Innenfläche der Öffnung, zumindest teilweise, vorzugweise vollständig, der keramische Klebstoff vorhanden.

Der Erfindung liegt zudem die Erkenntnis zu Grunde, dass mittlerweile Klebstoffe auf keramischer Basis kommerziell verfügbar sind, die eine Temperaturbeständigkeit von 1500°C und mehr aufweisen, so dass diese keramischen Klebstoffe trotz ihrer Verwendung in einer Turbinenschaufel einer Gasturbine und den darin auftretenden hohen Heißgas-Temperaturen weder Degradieren noch ihre verbindende Eigenschaft verlieren. Ein Beispiel für einen solchen keramischen Klebstoff ist der Klebstoff mit dem Markennamen "Resbond 989" der Firma Polytec PT GmbH.

Weitere Vorteile und Merkmale der Erfindung werden in den abhängigen Ansprüchen angegeben, wobei die darin angegebenen Merkmale gemäß den Rückbeziehungen der Patentansprüche kombiniert werden können.

Gemäß einer ersten vorteilhaften Ausgestaltung sitzt der Stopfen formschlüssig in der Öffnung. Beispiele für eine formschlüssige Verbindung des Stopfens in der Öffnung sind die Verschraubung und der Bajonettverschluss. Durch eine formschlüssige Verbindung kann der Stopfen grundlegend mit dem Grundkörper der Turbinenschaufel verbunden werden, wobei der keramische Klebstoff dann nur noch die Aufgabe besitzt, dass Lösen des Formschlusses zu verhindern. Wenn der Stopfen beispielsweise in der Öffnung verschraubt ist, dient der keramische Klebstoff als Verdrehsicherung. Dies ist insbesondere dann von Vorteil, wenn die Turbinenschaufel als Laufschaufel ausgebildet ist und die zu verschließende Öffnung an der Schaufelspitze stirnseitig am Schaufelblatt angeordnet ist. Während des bestimmungsgemäßen Betriebs der Turbinenschaufel wirken dann auf den Stopfen Fliehkräfte, die mit der Längsachse der Öffnung gleich gerichtet sind. In diesem Fall werden dann die auf den Stopfen wirkenden Fliehkräfte über den Formschluss in den Grundkörper der Turbinenschaufel übertragen, weswegen der Klebstoff dann wesentlich geringeren Scherkräfte standhalten muss als bei derjenigen Lösung, bei der der Stopfen rein zylindrisch mit einer glatten Oberfläche ausgestaltet ist und die Wand der Öffnung dementsprechend ebenso. Der Formschluss gewährleistet einen besonders sicheren Sitz des Stopfens.

Gemäß einer weiteren vorteilhaften Ausgestaltung kann der Formschluss als zylindrische oder konische Verschraubung ausgebildet sein. Der Vorteil der konischen Verschraubung liegt darin, dass maximal eine Umdrehung erforderlich ist, um den Stopfen in der Öffnung zu befestigen. Vorzugsweise werden die zur Herstellung der Verschraubung erforderlichen Gewinde in die Öffnung und am Stopfen erodiert. Das Erodieren stellt ein Prozess dar, der nur minimal Risse in den Grundwerkstoff einbringt.

Besonders bevorzugt ist des Weiteren die Ausgestaltung, bei der der Stopfen aus dem gleichen Material besteht wie die Turbinenschaufel bzw. wie der Grundkörper der Turbinenschaufel, in dem das zu verschließende Loch angeordnet ist. Ein Stopfen, der aus dem gleichen Grundwerkstoff besteht wie der Grundkörper der Turbinenschaufel, dehnt sich thermisch genauso aus wie das ihn umgebende Material des Grundkörpers, so dass diese Lösung selbst während des bestimmungsgemäßen Einsatzes der Turbinenschaufel spannungsarm ist, da trotz der Aufheizung der Turbinenschaufel keine Druckspannung im den Stopfen umgebenden Material erzeugt werden.

Weiter bevorzugt ist eine, die verschlossene Öffnung aufweisende Wand und auch der darin sitzende Stopfen flächig beschichtet. Durch das Überbeschichten der verschlossenen Öffnung können sowohl die Nahtstelle von Wand und Stopfen als auch der Klebstoff einerseits vor weiteren Einflüssen wie Korrosion oder Wärmeeintrag von außen und/oder innen weitestgehend geschützt werden. Zudem stellt die Beschichtung eine weitere Sicherung des Stopfens gegen Lösen dar. Dies gilt insbesondere für verschraubte Stopfen. Als Beschichtung kann beispielsweise eine Korrosionsschutzschicht verwendet werden, die hinlänglich auch als MCrAly-Beschichtung bekannt ist oder auch eine Alitierung, die häufig im Inneren der Turbinenschaufel aufgebracht ist.

Insgesamt betrifft die Erfindung eine gegossene Turbinenschaufel mit einer durch einen Stopfen verschlossenen Öffnung sowie ein Verfahren zum Herstellen einer solchen Turbinenschaufel. Um eine vergleichsweise langlebige Turbinenschaufel anzugeben, deren Spannung im Bereich der verschlossenen Öffnung minimiert sind und die zudem vergleichsweise einfach und kostengünstig herstellbar ist, wird vorgeschlagen, dass der Stopfen in der Turbinenschaufel verklebt ist. Weiter wird vorgeschlagen, dass zum Herstellen der Turbinenschaufel ein Grundkörper der Turbinenschaufel mit einer Öffnung hergestellt wird, wobei ein die Öffnung verschließender Stopfen in der Öffnung eingeklebt wird.

Weitere Vorteile und Merkmale der Erfindung werden anhand weiterer Ausführungsbeispiele näher erläutert. Es zeigen:
- Fig. 1: einen Längsschnitt durch einen Fußbereich einer Turbinenschaufel mit einem Stopfen,
- Fig. 2: einen Längsschnitt durch einen Spitzenbereich einer Turbinenschaufel mit einem Stopfen und
- Fig. 3: einen Längsschnitt durch den Spitzenbereich einer Turbinenschaufel mit einem alternativen Stopfen.

In allen Figuren sind identische Merkmale mit den gleichen Bezugszeichen versehen.

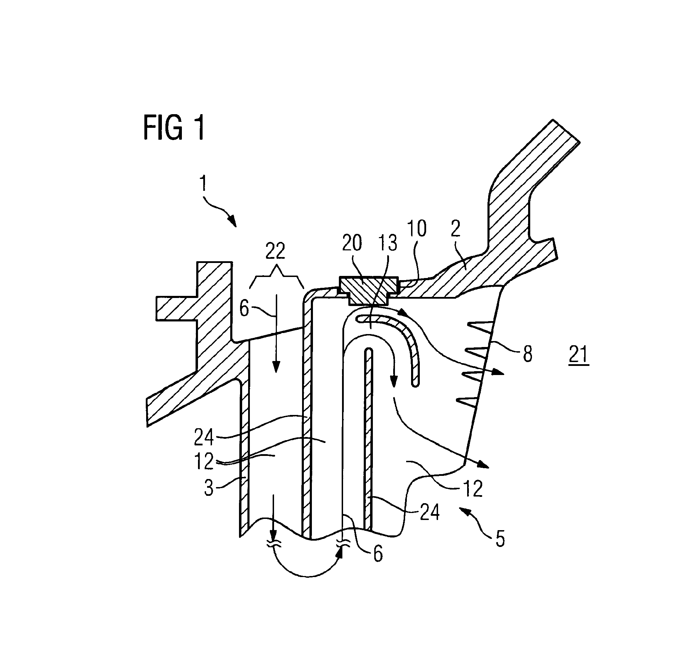

Figur 1 zeigt einen Längsschnitt durch einen Fußbereich und einen Teil eines Kanalsystems 5 einer luftgekühlten Turbinenschaufel 1. Das Kanalsystem 5 befindet sich im Wesentlichen im Schaufelblattbereich 3 der Turbinenschaufel 1. Es weist eine Eintrittsöffnung 22 am Fußbereich 2 am Beginn des Strömungsweges 6 der Kühlluft auf, durch die Kühlluft in das Kanalsystem 5 eingeführt wird sowie Austrittsöffnungen 8 im Abströmbereich 21 der Turbinenschaufel 1, durch die die Kühlluft am Ende seines Strömungsweges 6 das Kanalsystem 5 verlässt. Die Kühlluft wird auf seinem Strömungsweg 6 mäanderförmig in den Kanälen 12, die durch Zwischenwände 24 voneinander getrennt sind mehrfach vom Fußbereich zum nicht dargestellten Kopfbereich und wiederum zum Fußbereich geleitet. Die Kanäle 12 sind untereinander durch Umkehrstellen 13, die an den Fußbereich 2 oder den Kopfbereich angrenzen, verbunden. Im hinteren Bereich des Strömungswegs 6 den Austrittsöffnungen 8 vorgeordnet befindet sich eine Öffnung 10, die aufgrund der Herstellung der gegossenen Turbinenschaufel 1 erforderlich ist. In der Öffnung 10 ist ein Stopfen 20 eingesetzt, wodurch die Öffnung 10 luftdicht verschlossen ist. Während des Gusses befanden sich an der Stelle der Öffnung 10 einer der Quarz-Stifte, die den Gusskern relativ zum umgebenden Gießvorrichtung festsetzen und sicherstellen, dass vorbestimmte Bemaßungen eingehalten werden. Der Stopfen 20 ist korrespondierend zur Öffnung 10 gestuft zylindrisch ausgebildet und in der Öffnung 10 allein mit Hilfe eines keramischen hochtemperaturbeständigen Klebstoffs befestigt.

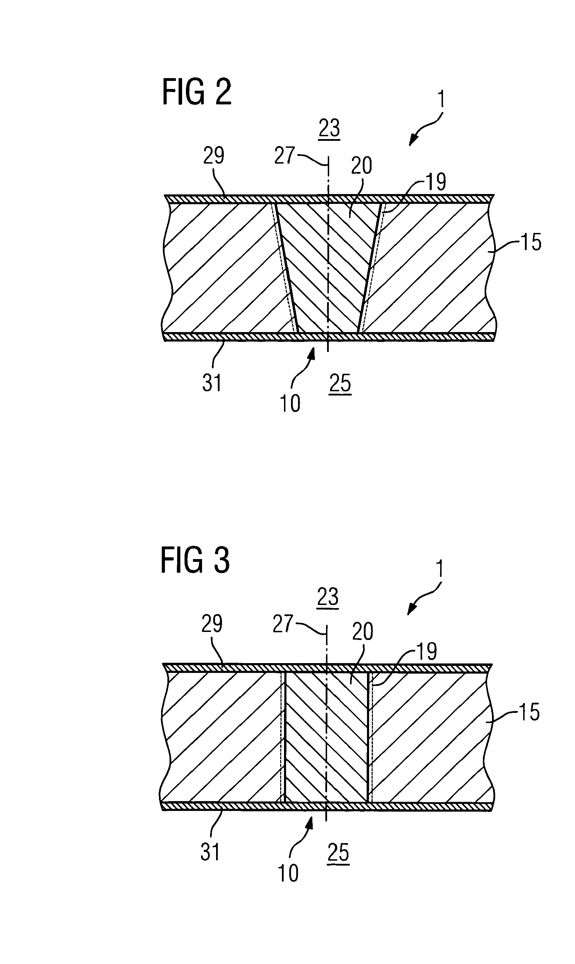

In den Figuren 2 und 3 sind weitere Ausführungsbeispiele dargestellt, bei denen der Stopfen 20 in der Öffnung 10 besonders zuverlässig sitzt.

Die Figuren 2 und 3 zeigen jeweils im Längsschnitt lediglich schematisch die radial (in Bezug auf die Maschinenachse einer nicht dargestellten Gasturbine) weiter außen angeordnete Wand 15 des Schaufelblatts einer als Laufschaufel ausgestalteten Turbinenschaufel 1. Die Wand 15 wird auch als Kronenboden bezeichnet. Der in Figur 2 oberhalb der Wand 15 dargestellte Bereich 23 liegt außerhalb der Turbinenschaufel 1, wohingegen der in Figur 2 unterhalb der Wand 15 dargestellte Bereich 25 innerhalb der Turbinenschaufel 1 liegt und somit Teil desjenigen Hohlraums ist, der im Betrieb von Kühlluft durchströmbar ist. In der Wand 15 ist die Öffnung 10 angeordnet, welche die Wand 15 komplett durchdringt. In der Öffnung 10 sitzt der Stopfen 20, der die Öffnung 10 vollständig verschließt. Der Stopfen 20 ist, wie in Figur 2 dargestellt, konisch ausgestaltet, was der Kontur der Öffnung 10 gemäß Figur 2 entspricht. Der Stopfen 20 verschließt die Öffnung 10 vollständig auch über die komplette axiale Erstreckung der Längsachse 27 der Öffnung 10, was jedoch in keiner Ausgestaltung zwingend erforderlich ist. Im gezeigten Ausführungsbeispiel ist an der Innenfläche der Öffnung 10 ein Innengewinde vorgesehen. Korrespondierend dazu ist an der mantelseitigen Außenfläche des Stopfens 20 ein Außengewinde vorgesehen, so dass der Stopfen 20 in der Öffnung 10 verschraubt ist. Zwischen den beiden Gewinden ist der hochtemperaturbeständige keramische Klebstoff als Verdrehsicherung vorhanden. Dieser Klebstoff wird vor dem Einschrauben des Stopfens 20 in der Öffnung 10 entweder auf das Gewinde des Stopfens 20 und/oder auf dem Gewinde der Öffnung 10 zumeist großflächig aufgebracht. Im gezeigten Ausführungsbeispiel ist von außen wie von innen jeweils eine Beschichtung 29, 31 vorgesehen. Beide Beschichtungen 29, 31 sind flächig auf der Wand 15 aufgebracht und überdecken vollständig den Stopfen 20 und dessen Nahtstelle mit der Wand 15. Die Beschichtung 29 könnte beispielsweise eine Korrosionsschutzschicht vom Typ MCrAlY sein. Darauf könnte des Weiteren eine keramische Wärmedämmschicht aufgetragen sein, die aber hier nicht gezeigt ist. Die innen angeordnete Beschichtung 31 könnte eine Alitierung sein.

Figur 3 zeigt ein zu Figur 2 alternatives Ausführungsbeispiel, wobei nachfolgend lediglich die Unterschiede zu dem Ausführungsbeispiel gemäß Figur 2 erläutert werden. Anstelle einer konischen Verschraubung 19 ist eine zylindrische Verschraubung 19 vorgesehen, d.h. sowohl der Stopfen 20 als auch die Öffnung 10 sind in ihrer Längserstreckung im Wesentlichen zylindrisch, abgesehen von den Gewinden.

## Patentansprüche

1. Gegossene Turbinenschaufel (1) mit einer durch einen Stopfen (20) verschlossenen Öffnung (10),
**dadurch gekennzeichnet, dass** der Stopfen (20) in der Turbinenschaufel (1) verklebt ist.

2. Turbinenschaufel (1) nach Anspruch 1, bei der der Stopfen (20) formschlüssig in der Öffnung (10) sitzt.

3. Turbinenschaufel (1) nach Anspruch 2, bei der der Formschluss als zylindrische oder konische Verschraubung (19) ausgebildet ist.

4. Turbinenschaufel (1) nach Anspruch 1, 2 oder 3, bei der der Stopfen (20) aus dem gleichen Material wie die Turbinenschaufel (1) besteht.

5. Turbinenschaufel (1) nach einem der vorangehenden Ansprüche, bei der eine die verschlossene Öffnung (10) aufweisende Wand (15) beschichtet ist.

6. Turbinenschaufel (1) nach einem der vorangehenden Ansprüche, welche als Laufschaufel oder als Leitschaufel ausgebildet ist.

7. Verfahren zum Verschließen einer Öffnung (10) in einer gegossenen Turbinenschaufel (1),
umfassend die Schritte:
- Herstellen eines Grundkörpers einer Turbinenschaufel (1) mit einer Öffnung (10),
- Einkleben eines die Öffnung (10) verschließenden
Stopfens (20) in der Öffnung (10).

8. Verfahren nach Anspruch 7,
bei dem vor dem Einkleben des Stopfens (20) ein Gewinde in die Öffnung (10) eingebracht wird und der Stopfen (20) mit einem Gewinde versehen wird.

9. Verfahren nach Anspruch 8,
bei dem das Gewinde der Öffnung (10) erodiert wird.

10. Verfahren nach Anspruch 6 oder 8,
bei dem zum Einkleben ein hochtemperaturbeständiger keramischer Klebstoff verwendet wird.

11. Verfahren nach einem der Ansprüche 7 bis 10,
bei dem die die verschlossene Öffnung (10) aufweisende Wand (15) beschichtet wird.
